# EUROPEAN PATENT SPECIFICATION

(11) **EP 1 362 896 B1**
(45) Date of publication and mention of the grant of the patent: **26.07.2006**
(21) Application number: 03252661.8
(22) Date of filing: 26.04.2003
(51) Int. Cl.: C09D 5/00

(54) **Method of producing wear resistant traffic markings**
Herstellungsverfahren von verschleissfester Strassenmarkierungsfarbe
Procédé de préparation de peinture résistante à l'usure pour le marquage des chaussées

(30) Priority: 07.05.2002 US 378259 P
(43) Date of publication of application: 19.11.2003
(73) Proprietor: ROHM AND HAAS COMPANY, Philadelphia, Pennsylvania 19106-2399 (US)
(72) Inventor: Hermes, Ann Robertson, Ambler, Pennsylvania 19002 (US); Landy, Francis Joseph, Jenkintown, Pennsylvania 19046 (US); Schall, Donald Craig, Lansdale, Pennsylvania 19446 (US)
(74) Representative: Kent, Venetia Katherine

(56) References cited:
- EP-A- 0 812 887
- US-A- 5 672 379

## Description

This invention generally relates to a method of producing traffic markings on road surfaces and more particularly to producing wear resistant traffic markings on road surfaces under high humidity conditions.

White and yellow traffic markings used for demarcating traffic lanes are a common sight on roads. These markings ensure safe driving conditions under varying weather conditions. The term "roads" generally means routes, highways, exit and entry ramps, passes, pavements, side walks, and parking lots for vehicles, such as autos, bikes, and trucks. The roads are usually paved with asphalt or concrete, generally from Portland cement. The majority of these traffic markings, such as solid, transverse, or interrupted stripes, are paint-based and include solvent compositions and aqueous compositions.

Traffic markings are subjected to traffic conditions including wear and tear resulting from contact with the tires of moving vehicles. Wear resistance is a desired property of a traffic marking. The term "wear resistance" means the degree of resistance to film detachment from the road surface and to the loss of retroreflectance due to removal of reflective glass beads from the surface of the traffic marking.

A method for preparing a wear resistant traffic marking using an aqueous based traffic composition is disclosed in U.S. Patent 5,672,379. The disclosed traffic composition contains a select latex binder having acetoacetyl groups and an aminosilane, wherein the level of aminosilane to modify the select latex binder is in the range of 0.1 to 2.0 moles of the amine moiety to one mole of acetoacetyl group. The reference further discloses in column 9, lines 36-39 that if insufficient aminosilane is used in relation to the select latex binder having acetoacetyl groups, the wear resistance, the water sensitivity, and the drying speed of the resultant traffic marking may be compromised.

EP-A-0 812 887 disdoses a method of producing wear resistant traffic markings on a road surface comprising applying a traffic paint composition containing an aminosilane. The description requires that aminosilane in the binder is from 0.1 to 20 moles of amine moiety to one mole of acetoxy group. Further, the description further discloses preferred ranges of am inosilane and notes that if insufficient aminosilane is used water sensitivity may be compromised.

The present invention in its various aspects is as set out in the accompanying claims.

The inventors have discovered a method of preparing a wear resistant traffic marking using a traffic paint composition containing lower levels of aminosilanes. Further, the method provides a wear resistant traffic marking, which may be dried at high humidity conditions. The traffic marking prepared by the method of this invention has acceptable wear resistance, drying speed, and retention of glass beads for retroreflectance.

One advantage of the present method is the reduction in the amount of aminosilane required to prepare a wear resistant traffic marking.

Another advantage of the present method is that the applied traffic paint composition is crosslinkable by two mechanisms, which aids in the development of wear resistant properties, particularly with high humidity drying conditions.

The first aspect of this invention provides a method for producing a wear resistant traffic marking on a road surface including the steps of applying on the road surface a layer of a traffic paint composition containing: copolymer particles dispersed in an aqueous evaporable carrier and an aminosilane bearing an amine moiety, wherein the copolymer particles bear pendant enamine moieties resulting from the reaction of a pendant acetoacetyl moieties with ammonia or amine; the copolymer particles having a glass transition temperature in the range varying from -30°C to 60°C; and wherein the level of the aminosilane is in the range varying from 0.02 to less than 0.1 moles of the amine moiety to one mole of the pendant acetoacetyl moieties; and evaporating the aqueous evaporable carrier from the layer to form the wear resistant traffic marking on the road surface.

The second aspect of this invention provides a traffic marking on a road surface prepared according to a method for producing a wear resistant traffic marking on a road surface; the method including the steps of: applying on the road surface a layer of a traffic paint composition containing copolymer particles dispersed in an aqueous evaporable carrier and an aminosilane bearing an amine moiety, wherein the copolymer particles bear pendant enamine moieties resulting from the reaction of a pendant acetoacetyl moieties with ammonia or amine; the copolymer particles having a glass transition temperature in the range varying from -30°C to 60°C; and wherein the level of the aminosilane is in the range varying from 0.02 to less than 0.1 moles of the amine moiety to one mole of the pendant acetoacetyl moieties; and evaporating the aqueous evaporable carrier from the layer to form the wear resistant traffic marking on the road surface.

As used herein:
"GPC number average molecular weight" means the number average molecular weight determined by gel permeation chromatography (GPC) which is described on page 4, Chapter I of The Characterization of Polymers published by Rohm and Haas Company, Philadelphia, Pennsylvania in 1976, utilizing polymethyl methacrylate as the standard. The GPC number average molecular weight can be estimated by calculating a theory number average molecular weight. In systems containing chain transfer agents, the theory number average molecular weight is simply the total weight of polymerizable monomer in grams divided by the total molar amount of chain transfer agent used during the polymerization. Estimating the molecular weight of an emulsion polymer system that does not contain a chain transfer agent is more complex. A cruder estimate can be obtained by taking the total weight of polymerizable monomer in grams and dividing that quantity by the product of the molar amount of an initiator multiplied by an efficiency factor (in our persulfate initiated systems, we have used a factor of approximately 0.5). Further information on theoretical molecular weight calculations can be found in *Principles of Polymerization* 2nd edition, by George Odian published by John Wiley and Sons, N.Y., N.Y. in 1981 and in *Emulsion Polymerization* edited by Irja Pirma published by Academic Press, N.Y., N.Y. in 1982.
"Glass transition temperature (Tg)" is a narrow range of temperature, as measured by conventional differential scanning calorimetry (DSC), during which amorphous polymers change from relatively hard brittle glasses to relatively soft viscous rubbers. To measure the Tg by this method, the copolymer samples were dried, preheated to 120°C., rapidly cooled to -100°C, and then heated to 150°C at a rate of 20°C/minute while data was being collected. The Tg was measured at the midpoint of the inflection using the half-height method.
"Polymer particle size" means the diameter of the polymer particles measured by using a Brookhaven Model BI-90 Particle Sizer supplied by Brookhaven Instruments Corporation, Holtsville, New York, which employs a quasi-elastic light scattering technique to measure the size of the polymer particles. The intensity of the scattering is a function of particle size. The diameter based on an intensity weighted average is used. This technique is described in Chapter 3, pages 48-61, entitled *Uses and Abuses of Photon Correlation Spectroscopy in Particle Sizing* by Weiner et al. in 1987 edition of the American Chemical Society Symposium series. To measure the particle diameter, 0.1 to 0.2 grams of a sample of acrylic polymer was diluted to a total of 40 milliliters (mLs) with distilled water. A two mLs portion was delivered into an acrylic cell, which was then capped. The particle size in nanometers (nm) was measured for 1000 cycles. The measurement was repeated three times and an average was reported.
"No-pick-up time" means the time it takes for the layer of wet traffic paint composition to dry out sufficiently to such extent that no paint adheres to a free roll of the rubber test wheels described in ASTM test D 711-89 entitled "Standard Test for No-Pick-Up Time of Traffic Paint".
The term "(meth)acrylate" refers to either acrylate or methacrylate and the term "(meth)acrylic" refers to either acrylic or methacrylic.

The traffic paint composition used in the method of this invention contains copolymer particles dispersed in aqueous evaporable carrier and an aminosilane.

The first step of the method of the present invention is directed to applying on a road surface a layer of a traffic paint composition. Various methods are know in the art to apply the layer of the traffic paint composition, such as, for example, by spraying the composition on the road surface using truck mounted spray guns where the traffic paint composition is supplied from an air pressurized tank or an airless pump; and by applying the traffic paint composition by hand using a paint brush or a paint roller. It is contemplated that the road surface on which the layer of the traffic paint composition is applied is preferably cleaned by removing any dirt or sediments prior to the application of the traffic paint composition. The thickness of the layer of the traffic paint composition generally varies from 300 microns to 3000 microns, preferably from 350 micron to 1000 microns.

The second step of the method of the present invention is drying the layer of the traffic paint composition to form the wear resistant coating. During the drying step, the aqueous evaporable carrier contained within the traffic paint composition is evaporated from the layer applied to the road surface. The rate of evaporation of the aqueous evaporable carrier is dependent upon the ambient conditions to which the layer of the traffic paint composition is exposed to and also upon the thickness of the layer applied to the road surface. It is to be noted that, the higher the atmospheric humidity, the longer will be the no-pick-up time for the layer of the traffic paint composition, as evaluated under ASTM D 711-89. For example, when the relative humidity is in the range of 65 percent to 90 percent, the no-pick-up time for the layer of the traffic paint composition varies in the range of from 1 minute to 60 minutes, preferably in the range of from 1 minute to 45 minutes, and most preferably in the range of from 1 minute to 20 minutes from the application of the layer.

The traffic paint composition suitable for use in the method of the present invention contains a dispersion of copolymer particles in an aqueous evaporable carrier. The copolymer particles bear enamine moieties that are pendant to the copolymer backbone. The copolymer particles typically have an average diameter in the range of from 20 nm to 1000 nm, preferably in the range of from 30 nm to 350 nm, and more preferably in the range of from 100 nm to 250 nm. The copolymer particles have a T_{g} in the range of -30°C to 60°C, preferably in the range of from -10°C to 50°C, and more preferably in the range of from 0°C to 40°C.

Typically, the copolymer particles are prepared from a monomer mixture containing one or more acetoacetyl functional monomer, one or more comonomer, and optionally, one or more acid monomer. After polymerization of the monomer mixture, the resulting polymer particles, which bear pendant acetoacetyl moieties, are contacted with an excess stoichiometric amount of ammonia or primary amine to provide the copolymer particles bearing pendant enamine moieties.

The monomer mixture generally contains from 1 percent to 10 percent, preferably from 2 percent to 9 percent, and most preferably, from 3 percent to 8 percent, of one or more acetoacetyl functional monomers, all percentages being in weight percentages based on the total weight of the copolymer particle solids. Acetoacetyl functional monomers are monomers having an ethylenic unsaturation and one or more acetoacetyl moieties. These acetoacetyl functional monomers have the following structures: 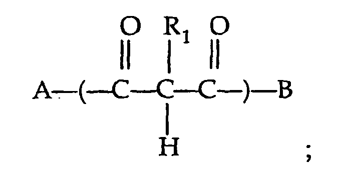 wherein A is either: 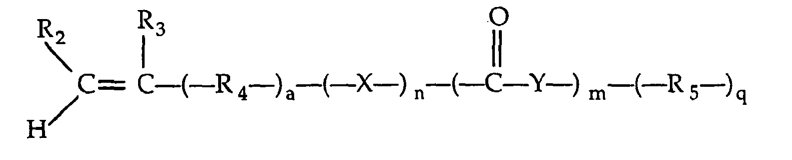 or 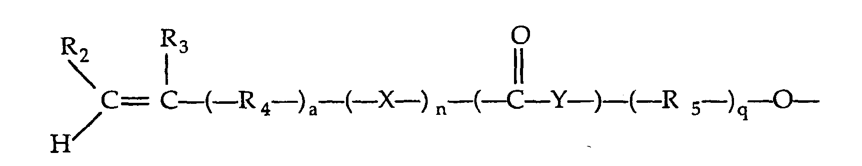 wherein R₁ is selected from H, alkyl having 1 to 10 carbon atoms, and phenyl; R₂ is selected from H, alkyl having 1 to 10 carbon atoms, phenyl, halo, CO₂CH₃, and CN; wherein R₃ is selected from H, alkyl having 1 to 10 carbon atoms, phenyl, and halo; wherein R₄ is selected from alkylene having 1 to 10 carbon atoms and phenylene; wherein R₅ is selected from alkylene having 1 to 10 carbon atoms and phenylene; wherein a, m, n, and q are independently selected from 0 and 1; wherein each of X and Y is selected from ―NH― and ―O―; and B is selected from A, alkyl having 1 to 10 carbon atoms, phenyl, and heterocyclic groups. Preferably the acetoacetyl functional monomers include, among the following, various acetoacetamides, including, but not limited to: 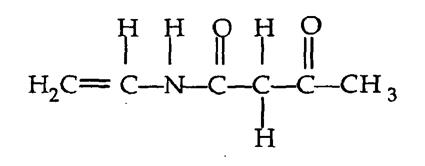 and 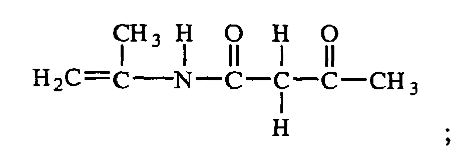 acetoacetoxyethyl methacrylate ("AAEM"); acetoacetoxyethyl acrylate ("AAEA"); allyl acetoacetate; vinyl acetoacetate; and combinations thereof.

AAEM is structurally represented as: 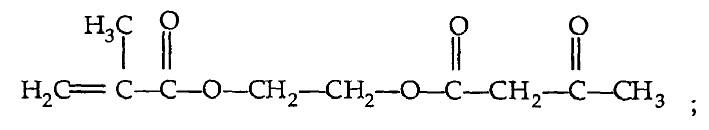 AAEA is structurally represented as: 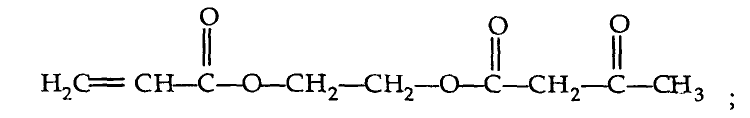 allyl acetoacetate is structurally represented as: 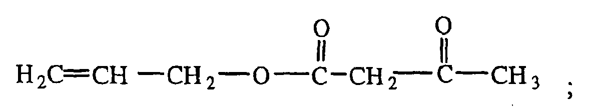 and vinyl acetoacetate is structurally represented as:

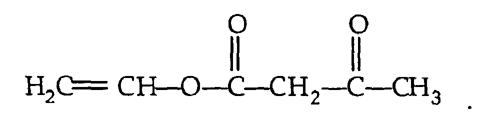

Particularly preferred acetoacetyl functional monomers include acetoacetoxyethyl methacrylate, acetoacetoxyethyl acrylate, acetoacetoxypropyl methacrylate, allyl acetoacetate, acetoacetoxybutyl methacrylate, 2,3-di(acetoacetoxy)propyl methacrylate, and combinations thereof.

A suitable monomer mixture also contains from 80 percent to 99 percent, preferably from 81 percent to 98 percent, and most preferably, from 87 percent to 97 percent, of one or more comonomers, all percentages being in weight percentages based on the total weight of the copolymer particle solids. Comonomers are ethylenically unsaturated monomers that are neither acetoacetyl functional monomer nor acid monomers. Suitable comonomers include styrene, butadiene, α-methyl styrene, vinyl toluene, vinyl naphthalene, ethylene, propylene, vinyl acetate, vinyl versatate, vinyl chloride, vinylidene chloride, acrylonitrile, methacrylonitrile, (meth)acrylamide, various C₁-C₄₀ alkyl esters of (meth)acrylic acid; for example, methyl (meth)acrylate, ethyl (meth)acrylate, n-butyl (meth)acrylate, 2-ethylhexyl (meth)acrylate, cyclohexyl (meth)acrylate, n-octyl (meth)acrylate, n-decyl (meth)acrylate, n-dodecyl (meth)acrylate, tetradecyl (meth)acrylate, lauryl (meth)acrylate, oleyl (meth)acrylate, palmityl (meth)acrylate, and stearyl (meth)acrylate; other (meth)acrylates such as isobornyl (meth)acrylate, benzyl (meth)acrylate, phenyl (meth)acrylate, 2-bromoethyl (meth)acrylate, 2-phenylethyl (meth)acrylate, and 1-naphthyl (meth)acrylate, and alkoxyalkyl (meth)acrylates, such as ethoxyethyl (meth)acrylate. Comonomers also include multiethylenically unsaturated monomers such as allyl methacrylate, diallyl phthalate, 1,4-butylene glycol dimethacrylate, 1,6-hexanediol diacrylate, and divinyl benzene. The level of one or more multiethylenically unsaturated monomer in the monomer mixture is chosen such that the quality of film formation is not materially impaired. Preferred comonomers include butyl acrylate, styrene, methyl methacrylate, and 2-ethyl hexyl acrylate.

An acid monomer is an ethylenically unsaturated monomer containing one or more acid moieties such as carboxylic acid groups, phosphorus acid groups, sulfonic acid groups, or salts thereof. Examples of acid monomers include carboxylic acid monomers such as (meth)acrylic acid, crotonic acid, itaconic acid, fumaric acid, maleic acid, monomethyl itaconate, monomethyl fumarate, and monobutyl fumarate; phosphorus acid monomers such as phosphoethyl(meth)acrylate; and sulfur acid monomers such as sodium vinyl sulfonate, and acrylamido propane sulfonate. Suitable levels of acid monomer in the monomer mixture include from 0 to 10 percent, preferably from 0.5 percent to 8 percent, and most preferably, from 1 percent to 6 percent, of one or more acid monomers, all percentages being in weight percentages based on the total weight of the copolymer particle solids.

The polymerization techniques used for preparing the copolymer particles having pendant acetoacetyl moieties are well known in the art. The copolymer particles having pendant acetoacetyl moieties are typically prepared by aqueous solution polymerization or by emulsion polymerization. Emulsion polymerization is preferred. Suitable initiation processes include thermal and redox initiation processes. Polymers and copolymers of alpha-beta ethylenically unsaturated monomers and their esters, especially the acrylic and methacrylic esters, are preferably prepared by processes given in "Emulsion Polymerization of Acrylic Monomers: May, 1966" published by the Rohm and Haas Company, Philadelphia, Pennsylvania.

The polymerization process is typically initiated by conventional free radical initiators, such as, for example, hydrogen peroxide, benzoyl peroxide, t-butyl hydroperoxide, t-butyl peroctoate, ammonium and alkali persulfates, typically at a level of 0.05 percent to 3.0 percent by weight, all weight percentages based on the weight of total monomer in the monomer mixture. Alternatively, redox systems using the same initiators coupled with a suitable reductant such as, for example, sodium bisulfite are optionally used at similar levels.

Chain transfer agents are optionally used in an amount effective to provide the desired GPC number average molecular weight. For purposes of regulating the molecular weight of the copolymer particles having pendant acetoacetyl moieties being formed, suitable chain transfer agents include well known halo-organic compounds such as carbon tetrabromide and dibromodichloromethane; sulfur-containing compounds such as alkylthiols including ethanethiol, butanethiol, tert-butyl and ethyl mercaptoacetate, as well as aromatic thiols; and various other organic compounds having hydrogen atoms which are readily abstracted by free radicals during polymerization. Additional suitable chain transfer agents include but are not limited to butyl mercaptopropionate; isooctyl mercaptopropionic acid; isooctylmercapto propionate; bromoform; bromotrichloromethane; carbon tetrachloride; alkyl mercaptans, such as, 1-dodecanthiol, tertiary-dodecyl mercaptan, octyl mercaptan, tetradecyl mercaptan, and hexadecyl mercaptan; alkyl thioglycolates, such as, butyl thioglycolate, isooctyl thioglycoate, and dodecyl thioglycolate; thioesters; and combinations thereof. Mercaptans are preferred. Preferred copolymer particles having a GPC number average molecular weight in the range of from 1000 to less than 30,000, more preferably in the range of from 5,000 to 25,000, and most preferably in the range of from 10,000 to 20,000.

The size of the copolymer particles having pendant acetoacetyl moieties is controlled by the amount of conventional surfactants added during the emulsion polymerization process. Conventional surfactants include anionic, nonionic emulsifiers, and combinations thereof. Typical anionic emulsifiers include the salts of fatty rosin and naphthenic acids, condensation products of naphthalene sulfonic acid and formaldehyde of low molecular weight, carboxylic polymers and copolymers of the appropriate hydrophile-lipophile balance, alkali or ammonium alkyl sulfates, alkyl sulfonic acids, alkyl phosphonic acids, fatty acids, and oxyethylated alkyl phenol sulfates and phosphates. Typical nonionic emulsifiers include alkylphenol ethoxylates, polyoxyethylenated alkyl alcohols, amine polyglycol condensates, modified polyethoxy adducts, long chain carboxylic acid esters, modified terminated alkylaryl ether, and alkylpolyether alcohols. Typical ranges for surfactants are between 0.1 to 6 percent by weight based on total weight of total monomer in the monomer mixture.

Alternatively, the copolymer particles having pendant acetoacetyl moieties have various morphologies such multi-stage polymer particles having two or more phases of various geometric structures, such as, for example, core/shell or core/sheath particles, core/shell particles with shell phases incompletely encapsulating the core, core/shell particles with a multiplicity of cores, and interpenetrating network particles. In all of these cases, the majority of the surface area of the particle will be occupied by at least one outer phase and the interior of the latex polymer particle will be occupied by at least one inner phase. The outer phase of the multi-stage polymer particles weighs 5 weight percent to 95 weight percent based on the total weight of the particle. It is often desirable for each stage of the multi-stage polymer particles to have a different Tg. If desired, each stage of these multi-stage polymer particles is provided with different GPC number average molecular weight, such as, the multi-stage polymer particle composition disclosed in US Patent 4,916,171.

The multi-stage polymer particles are prepared by conventional emulsion polymerization process in which at least two stages differing in composition are formed in a sequential fashion. Such a process usually results in the formation of at least two polymer compositions. Under certain circumstances, it is advantageous to have one of the polymer compositions be soluble in water or under aqueous alkaline conditions (pH > 7). Each of the stages of the multi-stage polymer particles optionally contain the same monomers, chain transfer agents, and surfactants, as those disclosed earlier for the polymer particles. The emulsion polymerization techniques used for preparing such multi-stage polymer particles are well known in the art and are disclosed, for example, in the US Patents 4,325,856, 4,654,397, and 4,814,373.

The aqueous evaporable carrier includes water and optionally a water miscible organic solvent, such as, methanol, ethanol, and glycol ethers. Generally, the pH of the aqueous evaporable carrier of the traffic paint composition is maintained in the range from 7.5 to 11, preferably from 9.5 to 10.7 to provide the copolymer particles with pendant enamine moieties or to provide stability to the copolymer particles.

The traffic paint composition of this invention also contains one or more aminosilanes. The aminosilanes contain amine moieties and groups such as alkoxysilane groups, which hydrolyzed in the presence of water to form silanol groups. Although not wanting to be limited by theory, it is believed that during the drying step the ammonia or primary amine evaporates from the applied traffic paint composition, thus allowing the amine moieties of the aminosilane to displace ammonia or primary amine from the enamine moieties previously formed by reaction of pendant acetoacetyl moieties and the ammonia or primary amine. The displacement of the ammonia or primary amine results in the formation of copolymer particles having silanol groups, wherein the silanol groups are attached by enamine groups to the copolymer particles. The silanol groups provide adhesion of the copolymer particles to pigment particles in the traffic paint composition, to the road surface, and/or to glass beads applied to or incorporated into the coating. The level of aminosilane in the traffic paint composition is from 0.02 to less than 0.1 moles of amine moiety to one mole of acetoacetyl group, preferably from 0.02 to 0.09, more preferably from 0.02 to 0.07.

While not wanting to be bound by theory, the inventors believe than the traffic paint compositions of the present invention have aminosilane levels in a range that allows the pendant acetoacetoxy moieties to crosslink by two different mechanisms. One mechanism is the reaction of the aminosilane with the acetoacetoxy moieties followed by silanol condensation. A second mechanism is oxidative cure from the reaction of the acetoacetoxy moieties with oxygen. The lower level of aminosilane relative to the level of acetoacetoxy moieties allows increased crosslinking by the oxidative cure mechanism. The oxidative cure mechanism is believe to be important to the development of wear resistant properties for the traffic markings dried under high humidity conditions, since slow water loss hinders the crosslinking through silanol condensation.

Aminosilanes of various molecular weights and structures are suitable to modify the latex binder having the pendant acetoacetyl moieties in practicing the present invention. The general structure of the aminosilanes useful for the invention is:

R₁ - Si (R₂)₃₋ₙ(OR₃)ₙ,

where n is an integer in the range of 1 to 3, R₁ is selected from alkyl, phenyl, and combinations thereof and contains at least one amine group capable of forming an enamine with the pendant acetoacetyl pendant moiety; each R₃ is individually selected from alkyl, phenyl, and hydrogen atom; and each R₂ is selected from hydrogen atom, phenyl, and alkyl. The group R₂ is alternatively selected from oligomers of silane, which optionally contain OR₃ groups and also optionally include amine functionality capable of undergoing enamine formation with acetoacetyl groups. Practical considerations, such as, solubility, hydrolysis rate, compatibility with the acetoacetate precursor polymer, polymer stability, are some of the few limitations placed upon the structure and molecular weight of the aminosilane. Preferably, n is equal to 3, R₂ is selected from methyloxy and ethyloxy group, and R₁ is an alkyl group of 3 to 6 carbon atoms and contains only one amine group capable of forming an enamine with the acetoacetyl group.

Some of the aminosilanes found to be effective modifiers of the latex binders having the enamine functional pendant moieties are selected from N-methylaminopropyltrimethoxysilane, aminoethylaminopropyltrimethoxysilane, aminopropylmethyldimethoxysilane, aminopropyltrimethoxysilane, polymeric aminoalkylsilicone, aminoethylaminoethylaminopropyl-trimethoxysilane, N-methylaminopropyltrimethoxysilane, aminopropylmethyldimethoxysilane, aminopropyltriethoxysilane, aminoethylaminopropylmethyldimethoxysilane, 4-aminobutyltriethoxysilane, oligomeric aminoalkylsilane, and various combinations thereof. These aminosilanes are available from Dow Corning, Midland, Michigan; Crompton, OSi Specialties, Greenwich, CT; and Sivento™ silanes, Degussa, Parsippany, NJ. Aminoethylaminopropyltrimethoxysilane, sold under the tradename Dow Corning Z-6020 is preferred.

The copolymer particles are preferably provided with an acid functional pendant moiety sufficient to provide the copolymer particles with an acid number in the range of from 0.1 to 390, preferably in the range of from 0.8 to 390, more preferably in the range of from 2 to 100, and most preferably in the range of from 6 to 50. The desired acid number is achieved by controlling the amount of acid functional monomer utilized in producing the copolymer particles. The desired range of the acid number is obtained by utilizing copolymer particles containing an acid functional monomer, such as, phosphoethyl methacrylate monomer or ethylenically-unsaturated carboxylic acid monomers, such as, acrylic acid, fumaric acid-monoethyl ester, fumaric acid, itaconic acid, maleic acid, maleic anhydride, methacrylic acid, fumaric acid-monomethyl ester, methyl hydrogen maleate, 2-acrylamido-2-methylpropane sulfonic acid, sodium vinyl sulfonate, sulfoethyl methacrylate, or various combinations thereof. Ethylenically-unsaturated carboxylic acid monomer is preferred. More preferred ethylenically-unsaturated carboxylic acid monomer is selected from the group consisting of acrylic acid, methacrylic acid, and various combinations thereof.

Typically the copolymer particles are provided with an enamine functional pendant moiety, by reacting pendant acetoacetyl moiety on the backbone of the latex polymer with an excess of stoichiometric amount of ammonia or primary amine added to the aqueous evaporable carrier of the waterborne traffic paint composition. Generally, the pH of the aqueous evaporable carrier of the waterborne traffic paint composition is maintained in the range varying from 7.5 to 11, preferably from 9.5 to 10.7 to provide the copolymer particles with the enamine functional pendant moiety.

In one embodiment, a traffic paint composition having accelerated drying time and a method of preparing traffic marking from this traffic paint composition is provided. One composition of this embodiment includes a traffic paint composition that contains a polyfunctional polyamine, anionically stabilized copolymer particles, and a volatile base. Examples of polyfunctional polyamines include poly(oxazolidinylethyl methacrylate), poly(vinylamine) and poly(ethyleneimine). U.S. Patent 5,672,379 discloses additional polyfunctional polyamines. The polyfunctional polyamine is alternatively present in the paint or added as a separate component before, during or after the traffic paint composition is applied. U.S. Patent 5,804,627 provides additional information on the use of polyfunctional polyamines in traffic paint.

Another composition suitable for providing a traffic paint composition having accelerated drying time contains copolymer particles containing pendant amine functionality and a volatile base. The copolymer particles bearing pendant amine functionality are derived from processes such as copolymerizing amine functional monomer into the copolymer particles or subsequently reacting copolymer particles to yield copolymer particles having pendant amine groups. A polyfunctional amine is optionally included in the traffic paint composition containing the copolymer particles bearing pendant amine functionality. U.S. Patent 5,922,398 provides additional information on the use of latex polymers containing pendant amine functionality.

The traffic paint composition optionally includes an amine modified latex binder, a blend of the copolymer particles with a polyfunctional amine, or a combination thereof, preferably in equal proportions, of the blend and the amine modified latex binder. The blend includes from 0 to 20 percent, preferably 0.5 to 10, and more preferably 2 to 5 percent, of the polyfunctional amine, all in weight percentages based on the total weight of the blend solids.

In the traffic paint composition having accelerated dry time, the aqueous evaporable carrier containing the copolymer particles has a pH in the range of from 7.5 to 11, preferably from 9.5 to 10.7 to maintain substantially all of the polyfunctional amine or the amine modified latex binder in a deprotonated state. This means that substantially all of the amine functional group in the polyfunctional amine or in the amine modified latex binder is in a deprotonated state. The desired pH of the aqueous evaporable carrier is obtained by the addition of a base, such as, ammonia; alkali metal hydroxide such as sodium hydroxide; morpholine and the lower alkyl amines, such as, 2-methylaminoethanol, 2-dimethylaminoethanol, N-methylmorpholine, and ethylenediamine. Volatile bases, such as ammonia, or a mixture of volatile bases and nonvolatile bases, such as, sodium hydroxide, are preferred. Ammonia in particular is most preferred. As a result of the deprotonation of the amine functional groups in the polyfunctional amine, substantially all of the amine functional groups are uncharged, i.e., neutralized, thus preserving colloidal stability of the copolymer particles.

Accelerated dry time of the traffic paint composition is also obtained by employing absorbers. Absorbers are materials that absorb small molecules such as water, ammonia, C₁-C₆ alkylamines, C₁-C₆ alcohols, and mixtures thereof. Examples of absorbers include, but are not limited to, ion exchange resins, hollow sphere polymers, molecular sieves, organic super absorbing polymers, inorganic absorbents, porous and non-porous carbonaceous materials, and mixtures thereof. U.S. 5,947,632 provides additional information on the use of absorbers in traffic paint. Hollow sphere polymers, which include polymer particles containing one or more voids and vesiculated polymer particles are disclosed in U.S. Patent 4,427,835; U.S. Patent 4,920,160; U.S. Patent 4,594,363; U.S. Patent 4,469,825; U.S. Patent 4,468,498; U.S. Patent 4,880,842; U.S. Patent 4,985,064; U.S. Patent 5,157,084; U.S. Patent 5,041,464; U.S. Patent 5,036,109; U.S. Patent 5,409,776; and U.S. Patent 5,510,422.

If desired, the method of the present invention optionally includes dropping glass beads on the layer of the traffic paint composition of the present invention before the layer is dry to ensure the adhesion of the glass beads to the layer applied to the road surface. Facially disposed glass beads on the traffic markings act as light reflectors. If glass beads are not used, the traffic markings would be difficult to see under night and wet weather conditions. Thus, almost all of the traffic markings are beaded, i.e., glass beads sprinkled and affixed on top of the coatings roughly at the rate of 0.72 to 2.9 kilograms or more per liter of paint for night and wet weather visibility. The glass beads are dropped by methods known in the art, such as, by spraying the glass beads entrained and conveyed by a jet of air and dropped atop the layer or by sprinkling the glass beads at a desired rate from a storage hopper positioned above the layer of the traffic paint composition of the present invention. The glass beads are applied over the layer, while the layer is still in its "wet state, i.e., before the layer dries up to form the traffic paint marking. The amount of glass beads dropped on the layer is dependent upon the size, refractive index, and surface treatment of the glass beads. Alternatively, the glass beads are premixed into the traffic paint composition prior to the application of the traffic paint composition onto the road surface. The typical glass beads specified for traffic markings are described under AASHTO Designation M 247-81 (1993) developed by American Association of State Highway and Transportation Officials, Washington, D.C. The traffic paint composition used in the method of the present invention not only provides improved wear resistance over the alkyd-based traffic paints, but it also provides improved bead retention, which commonly refers to the degree of retention provided by the traffic paint binder to the facially disposed glass beads.

If desired, the no-pick-up time for the layer of the traffic paint composition of the present invention is further improved by contacting the layer with a coagulant, which includes, weak acids, such as, aqueous acetic or citric acid, at a strength in a range of from 10 to 30 weight percent, more preferably at 20 weight percent; or strong acids, such as hydrochloric or sulfuric acids, diluted to a strength in the of 5 to 15 weight percent, preferably 10 weight percent. Citric acid is preferred. Any one of the conventional methods known in the art, such as, for example, by spraying the coagulant on the layer are suitable for applying the coagulant. It is believed without reliance thereon, the coagulant when contacted with the applied layer of the traffic paint composition coagulates the copolymer particles present in the layer to improve the drying rate of the layer. The amount of the coagulant sprayed on the layer depends upon the amount of the copolymer particles used in the traffic paint composition. The amount in weight percent of the coagulant sprayed on the layer of the traffic paint composition depends upon the type of acid, its strength, and the type of spraying equipment used in carrying out the coagulation step. The coagulant, such as, citric acid at 20 percent strength, applied at the rate in the range of 0.6 percent to 2 percent, preferably at 1 percent, all in weight percentages, based on the total weight of the traffic paint composition applied as a layer is suitable.

If desired, the copolymer particles suitable for the method of this embodiment are further provided with an acid functional pendant moiety by the method described earlier. These copolymer particles, as described earlier, are optionally blended with a polyfunctional amine maintained in a deprotonated state by raising the pH of the aqueous evaporable carrier of the traffic paint composition and if further desired, the no-pick-up time for the layer of this traffic paint composition is further improved by contacting the layer with a coagulant by the process described earlier.

If desired and depending on the intended use of the traffic paint composition, additional components optionally added to the composition. These additional components include but are not limited to thickeners; rheology modifiers; dyes; sequestering agents; biocides; dispersants; pigments, such as, titanium dioxide, organic pigments, and carbon black; extenders, such as, calcium carbonate, talc, clays, silicas, and silicates; fillers such as glass or polymeric microspheres, quartz, and sand; anti-freeze agents; plasticizers; adhesion promoters; coalescents; wetting agents; waxes; surfactants; slip additives; crosslinking agents; defoamers; colorants; preservatives; freeze/thaw protectors; corrosion inhibitors; and alkali or water soluble polymers.

The following examples are presented to illustrate the invention and the results obtained by the test procedures. The examples are illustrative only and are not intended, nor should they be construed, to limit the scope of the invention as modifications should be obvious to those of ordinary skill in the art.

### Example 1- Preparation of Copolymer Particles

The copolymer particles of the traffic paint composition were prepared as aqueous copolymer particle dispersions.

### Example 1.1

A monomer emulsion was prepared containing 700g DI water, 32g sodium lauryl sulfate (28% active), 838g butyl acrylate, 1056g methylmethacrylate, 26g methacrylic acid, 80g acetoacetoxyethylmethacrylate, and 25g n-dodecylmercaptan.

The reactor was a 5-liter, four necked, round bottom flask equipped with a paddle stirrer, a thermometer, a nitrogen inlet, and a reflux condenser. To the flask was added 850g deionized water (DI water). The contents of the flask was heated to a temperature of 90°C under a nitrogen atmosphere. Next, a solution of 10.4g ammonium bicarbonate dissolved in 60 DI water, a solution of 10.4g ammonium persulfate dissolved in 60g DI water, and 145g polymer seed (average particle diameter 60 nm, solids content 41.5 weight %) were added to the flask followed by the addition of 30g DI water. The monomer emulsion was added to the flask while maintaining the flask contents at a temperature of 86°C. After the complete addition of the monomer mixture, 0.01g FeSO₄ in 9g DI water, 0.01g tetrasodium salt of ethylenediamine tetraacetic acid in 9g of DI water, 1.8g t-butylhydroperoxide in 30g DI water and 0.6g isoascorbic acid in 30g DI water were added at 60°C to the contents of the flask. Ammonium hydroxide was added to give a final pH of 9.3. The resulting aqueous copolymer particle dispersion, Example 1.1, had a solids content of 51.1 weight % and an average particle diameter of 222 nm. The copolymer particles of Example 1.1 had a GPC number average molecular weight of 14,100.

### Example 1.2

The reactor of Example 1.1 was used to prepared the aqueous copolymer particle dispersion of Example 1.2. A monomer emulsion was prepared containing 700g DI water, 26g sodium lauryl sulfate (28% active), 803g butyl acrylate, 1011g methylmethacrylate, 160g acetoacetoxyethylmethacrylate, 26g methacrylic acid, and 25g n-dodecylmercaptan.

To the flask was added 750g deionized water (DI water). The contents of the flask was heated to a temperature of 85°C under a nitrogen atmosphere. Next, 6g sodium lauryl sulfate (28% active), 10g DI water, a solution of 5.2g of ammonium bicarbonate dissolved in 30g DI water, a solution of 5.2g ammonium persulfate dissolved in 92g DI water, and 115g of the monomer emulsion were added to the flask. The remaining monomer emulsion was added along with the co-addition of a solution of 5.2g ammonium persulfate dissolved in 30g DI and a solution of 5.2g ammonium bicarbonate dissolved in 30 g DI water, while maintaining the contents of the flask at a temperature of 85°C. After the addition of the monomer emulsion, 0.01g FeSO₄ in 9g DI water, 0.01g tetrasodium salt of ethylenediamine tetraacetic acid in 9g of DI water, 1.8g t-butylhydroperoxide in 30g DI water and 0.6g isoascorbic acid in 30g DI water were added at 60°C to the contents of the flask. Ammonium hydroxide was added to raise the pH to 10.3. The resulting aqueous copolymer particle dispersion of Example 1.2 had a solids content of 50.8 weight % and an average particle diameter of 195 nm.

### Example 1.3

An aqueous copolymer particle dispersion was prepared according to the process of Example 1.2. The resulting aqueous copolymer particle dispersion of Example 1.3 had a solids content of 49.4 weight % and an average particle diameter of 208 nm.

### Example 1.4

Example 1.4 was a commercially available material sold as Fastrack™ 3427 polymer, an aqueous copolymer particle dispersion sold by Rohm and Haas Company (Philadelphia, PA). Example 1.4 contains acrylic copolymer particles that do not bear pendant acetoacetoxy moieties, and had a solids content of 50 weight % and an average particle diameter of 200 nm. Example 1.4 further contains 0.5 weight % of a polyfunctional polyamine, based on the weight of the aqueous copolymer particle dispersion.

The copolymer particles of Examples 1.1 to 1.4 had glass transition temperatures in the range of from 20°C to 28°C.

### Example 2 - Preparation of Traffic Paint Compositions and Comparative Traffic Paint Compositions

Traffic paint compositions and comparative traffic paint compositions were prepared by first adding ammonium hydroxide to the aqueous copolymer dispersion of Examples 1.1 to raise the pH to greater than 10. Next, 0.6 weight % of a C₁₁ to C₁₅ secondary alcohol ethoxylate surfactant, based on the weight of the aqueous copolymer dispersion, aminosilane, and polyfunctional polyamine were added at the levels indicated in Table 2.1 to provide modified aqueous copolymer dispersions. The aminosilane was aminoethylaminopropyltrimethoxysilane. The polyfunctional polyamine was a polymer prepared from dimethylaminoethylmethacrylate monomer, as described in U.S. Patent 6,013,721.

**Table 2.1 - Addition of Polyamine and Aminosilane to Aqueous Copolymer Compositions**

| Modified Aqueous Copolymer Dispersions | Aqueous Copolymer Dispersion | Polyamine Level (wt. % based on wt. solids of copolymer particles) | Aminosilane Level (moles amine moiety to one mole pendant acetoacetyl moieties) |
|---|---|---|---|
| Example 1.1a | Example 1.1 | 0.5 | 0.02 |
| Example 1.1b | Example 1.1 | 0.5 | 0.06 |
| Example 1.1c | Example 1.1 | 0.5 | 0.09 |
| Example 1.2a | Example 1.2 | 0.5 | 0.056 |
| Comparative Example 1.4a | Example 1.4 | - | - |
| Comparative Example 1.1d | Example 1.1 | 0.5 | 0.11 |
| Comparative Example 1.3a | Example 1.3 | 0.5 | 0.112 |

| | | | |
|---|---|---|---|
| Note: Example 1.4 contains 0.5 weight % of a polyfunctional polyamine. Next, base paint compositions were prepared by mixing the modified aqueous copolymer particle dispersion, water #1, dispersant, surfactant, defoamer, titanium dioxide, and calcium carbonate using high shear mixing for 10 minutes. Next, methanol, coalescent, thickener, and water #2 were added with mixing. The materials and their addition levels are listed in Tables 2.2a and 2.2b | | | |

**Table 2.2a - Traffic Paint Compositions**

| Materials | Example 2.1 | Example 2.2 | Example 2.3 | Example 2.4 |
|---|---|---|---|---|
| Example 1.1a | 460.4 g | - | - | - |
| Example 1.1b | - | 460.4 g | - | - |
| Example 1.1c | - | - | 460.4 g | - |
| Example 1.2a | - | - | - | 461.3 g |
| water #1 | 12.2 g | 12.2 g | 12.2 g | 7.2 g |
| dispersant | 7.2 g | 7.2 g | 7.2 g | 7.2 g |
| surfactant | 2.8 g | 2.8 g | 2.8 g | 2.8 g |
| defoamer | 5.5 g | 5.5 g | 5.5 g | 5.5 g |
| titanium dioxide | 100.0 g | 100.0 g | 100.0 g | 100.0 g |
| calcium carbonate | 760.3 g | 760.3 g | 760.3 g | 760.3 g |
| methanol | 30.0 g | 30.0 g | 30.0 g | 30.0 g |
| coalescent | 23.0 g | 23.0 g | 23.0 g | 23.0 g |
| thickener | 4.0 g | 3.9 g | 4.0 g | 10.1 g |
| water #2 | 2.0 g | 2.1 g | 2.0 g | - |

**Table 2.2b - Comparative Traffic Paint Compositions**

| Materials | Comparative A | Comparative B | Comparative C |
|---|---|---|---|
| Example 1.1d | - | 460.4 g | - |
| Example 1.3a | - | - | 466.0 g |
| Example 1.4a | 455.5 g | - | - |
| water #1 | - | 12.2 g | 2.8 g |
| dispersant | 5.0 g | 7.2 g | 7.2 g |
| surfactant | 2.8 g | 2.8 g | 2.8 g |
| defoamer | 5.5 g | 5.5 g | 5.5 g |
| titanium dioxide | 100.0 g | 100.0 g | 100.0 g |
| calcium carbonate | 760.3 g | 760.3 g | 760.3 g |
| methanol | 30.0 g | 30.0 g | 30.0 g |
| coalescent | 23.0 g | 23.0 g | 23.0 g |
| thickener | 6.9 g | 4.2 g | 10.1 g |
| water #2 | 17.6 g | 1.8 g | - |

| | | | |
|---|---|---|---|
| Materials: dispersant - Tamol™ 901 dispersant (Rohm and Haas Company); surfactant - Surfynol™ CT136 surfactant (Air Products and Chemicals); defoamer - Drew™ L-493 defoamer (Drew Chemical Co.); titanium dioxide - TiPure™ R-900 titanium dioxide (E.I. DuPont de Nemours & Co.); calcium carbonate - Omyacarb™ 5 calcium carbonate (Omya, Inc.); coalescent - Texanol™ coalescent (Eastman Chemical, Inc.); thickener - 2% aqueous solution of Natrosol™ 250HR hydroxethyl cellulose (Aqualon, Inc.). | | | |

### Example 3 -Evaluation of Traffic Paint Compositions and Comparative Traffic Paint Compositions

The wear resistant properties of the traffic markings prepared by the method of the present invention were evaluated by the wet adhesion test, which was used to characterize film detachment from road surfaces, and the retroreflectance test, which characterized the ability of the traffic markings to retain reflective glass beads on the surface of the marking.

### Wet Adhesion Test

Glass test panels (10cm x 30cm) were cleaned with consecutive wipes of water, acetone, and isopropanol. Next, the traffic paint compositions and the comparative traffic paint compositions were applied to the glass test panels. The thickness of the applied traffic paint compositions was controlled to provide dried film thickness of about 100 microns. The applied films were first allowed to dry at room temperature for 24 hours, then exposed to a water mist for 24 hours, and finally removed from the water mist for wet adhesion testing. The surface of the dried film was blotted dry and then a 100 square grid was cut through the dried film with a razor blade. Pressure sensitive tape (#720 from 3M Co., MN) was pressed onto the grid area and then pulled off with a slow, steady pull. The number of squares of the dried film remaining on the glass test panel were counted and reported as % coating remaining. A higher percentage of the coating remaining indicated better wet adhesion. A value of 90% or greater indicated acceptable wet adhesion.

### Dry-to-No-Pickup Time Test

The traffic paint compositions were applied over 10cm X 30cm glass test panels to form a layer of the traffic paint composition. The thickness of the layer was controlled to about 320 microns. The test panels were then promptly placed in a test chamber supplied by Victor Associates, Inc., Hatboro, PA, and maintained at a desired relative humidity of 85 percent to 90 percent. The test chamber was equipped with a certified hygrometer and a certified temperature indicator, both of which were fastened to the center of the rear wall of the test chamber to ensure balanced measurement. Prior to positioning the test panels inside the test chamber, the pan at the bottom of the test chamber was filled to a height of 2 cm with water, and then all the ports and doors were closed and the test chamber was allowed to equilibrate overnight. After overnight equilibration, the relative humidity within the test chamber reached 100 percent. By carefully opening and closing the various ports, the relative humidity within the chamber was then brought to the desired relative humidity. The door of the test chamber was opened briefly at 4 minute intervals to touch the wet paint films lightly with the tip of a clean finger. When the film was dry to a light touch, the panel was taken out of the test chamber and dry-to-no-pickup time was determined in accordance with ASTM D711 by rolling a traffic paint drying wheel over the wet film. The end point for the dry-to-no-pickup time is defined as the point in time where no paint adheres to the rubber rings of the test wheel. A dry-to-no-pickup time of 45 minutes or less was considered acceptable.

### Storage Stability

The traffic paint compositions were tested for consistency in accordance with ASTM Standard Method D562 by using a Thomas Stormer™ Viscometer, Model VI-9730-G60, supplied by Paul N. Gardner Company, Inc., Pompano Beach, FL. The traffic paint compositions were then placed in sealed 0.25 liter containers and stored in a sealed circulation oven at 60°C for 10 days. The containers were then removed from the oven and allowed to cool to room temperature for 1 day. The containers were opened, mixed for 3 minutes on a mechanical mixer, and immediately tested again for consistency under the aforedescribed ASTM Method D562. The stored traffic paint composition was rated to have passed the storage stability test if the traffic paint composition consistency, as measured in Krebs units (KU), did not increase by more than 10 KUs from the its initial measurement before it was stored in the oven.

### The Retroreflectance Test

The retroreflectance of the traffic paint markings prepared in accordance with the method of the present invention was evaluated under ASTM D 4061 entitled "Test Method for Retroreflectance of Horizontal Coatings". The traffic markings, also known as, test tracks, were prepared and applied in accordance with ASTM D713-90. The glass beads used on test markings were in conformance to AASHTO Designation M 247-81 (1993) published by the American Association of State Highway and Transportation Officials, Washington, D.C.

Thick layers of traffic paint (550 micrometers thickness) of the traffic paint composition and the comparative traffic paint compositions were spray applied transversely to the direction of traffic flow, i.e., perpendicular to the flow of traffic, over an asphalt road by means of a walk behind, self-propelled striping machine, supplied by Linear Dynamics, Inc., Parsippany, N.J. The reason for applying the test tracks in a direction transverse to the traffic flow was to accelerate the degradation of test tracks by increasing the number of vehicle passes over the test tracks. Glass beads, sold under the name Visibead™ L-511 Highway Safety Marking Spheres supplied by Potters Industries, Inc., Carlstadt, N.J., were dropped on the layer of the traffic paint composition and the layers of the comparative traffic paint compositions. The retroreflectance was measured with a LTL2000 Retrometer supplied by Flint Trading, Inc, Thomasville, N.C. The retroreflectance readings were taken in the center location of the transverse test lines, 13 months after application. Retroreflectance readings with values above 100 were considered acceptable.

**Table 3.1 - Results of Wet Adhesion Test, Dry to No-Pickup Time Test, and Paint Stability Test**

| Traffic Paint Composition | Wet Adhesion Test (% coating remaining) | Dry to No-Pickup Time Test (minutes to no paint pickup) | Paint Stability Test (Δ KU) |
|---|---|---|---|
| Comparative A | 0% | - | - |
| Example 2.1 | 100% | 32 | +5 |
| Example 2.2 | 100% | 42 | +5 |
| Example 2.3 | 100% | - | +5 |
| Comparative B | 100% | 32 | +5 |

The results in Table 3.1 show that the traffic markings produced by the method of this invention using traffic paint compositions, Examples 2.1 to 2.3 have acceptable comparable wet adhesion, acceptable dry to no-pickup time, and acceptable paint stability. Further, Examples 2.1 to 2.3, which contained levels of aminosilane in the range of 0.02 to 0.09 moles of amine moiety per mole of pendant acetoacetyl moieties, had comparable properties to the comparative traffic marking prepared from the comparative traffic paint composition, Comparative B, which contained a level of aminosilane of greater than 0.1 moles of amine moiety per mole of pendant acetoacetyl moieties. The results also showed that the comparative traffic marking prepared from the comparative traffic paint composition that did not contain aminosilane, Comparative A, had an unacceptable level of wet adhesion.

**Table 3.2 - Results of Retroreflectance Test**

| Traffic Paint Composition | Retroreflectance Test |
|---|---|
| Example 2.4 | 101.5 |
| Comparative C | 115.5 |
| Comparative A | 76.5 |

The results in Table 3.2 show that a traffic marking prepare by the method of this invention using the traffic paint composition, Example 2.4, had an acceptable level of retroreflectance. Example 2.4 had a mole ratio of amino moiety to acetoacetyl moieties of 0.056. In comparison, the traffic marking prepared from Comparative A, which did not contain aminosilane, had an unacceptable loss of glass beads as a result of traffic wear, as indicated by an unacceptable value for the retroreflectance test.

## Claims

1. A method for producing a wear resistant traffic marking on a road surface comprising the steps of:
a) applying on said road surface a layer of a traffic paint composition comprising: copolymer particles dispersed in an aqueous evaporable carrier and an aminosilane bearing an amine moiety, wherein said copolymer particles bear pendant enamine moieties resulting from the reaction of a pendant acetoacetyl moieties with ammonia or amine; said copolymer particles having a glass transition temperature in the range varying from -30°C to 60°C; and wherein the level of said aminosilane is in the range varying from 0.02 to less than 0.1 moles said amine moiety to one mole of said pendant acetoacetyl moieties; and
b) evaporating said aqueous evaporable carrier from said layer to form said wear resistant traffic marking on said road surface.

2. The method of claim 1 wherein said level of said aminosilane is in the range varying from 0.02 to 0.09 moles said amine moiety to one mole of said pendant acetoacetyl moieties.

3. The method of claim 1 or claim 2 wherein said copolymer particles comprise as polymerized units, from 1 to 10 weight percent, based on weight of said copolymer particles, of an acetoacetyl functional monomer having the following structure: 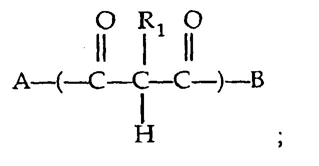 wherein A is either: 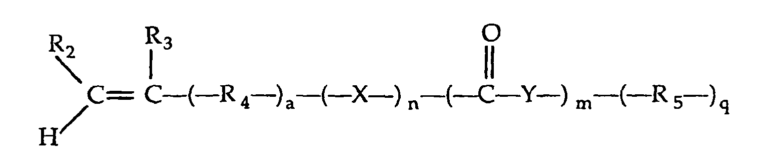 or 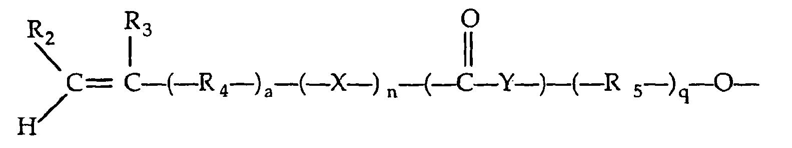 wherein
R₁ is selected from the group consisting of H, alkyl having 1 to 10 carbon atoms, and phenyl;
R₂ is selected from the group consisting of H, alkyl having 1 to 10 carbon atoms, phenyl, halo, CO₂CH₃, and CN;
R₃ is selected from the group consisting of H, alkyl having 1 to 10 carbon atoms, phenyl, and halo;
R₄ and R₅ are independently selected from the group consisting of alkylene having 1 to 10 carbon atoms and phenylene;
a, m, n, and q are independently selected from either 0 or 1;
X and Y are independently selected from ―NH― or ―O―; and
B is selected from the group consisting of A, alkyl having 1 to 10 carbon atoms, phenyl, and heterocyclic groups.

4. The method of claim 3 wherein said acetoacetyl functional monomer is selected from the group consisting of acetoacetoxyethyl methacrylate, allyl acetoacetate, acetoacetoxyethyl acrylate, acetoacetoxypropyl methacrylate, acetoacetoxybutyl methacrylate, 2,3-di(acetoacetoxy)propyl methacrylate, and combinations thereof.

5. The method of claim 1 or claim 2, wherein said aminosilane is selected from the group consisting of aminoethylaminoethylaminopropyl-trimethoxysilane, aminoethylaminopropylmethyldimethoxysilane, aminopropyltriethoxysilane, aminopropylmethyldimethoxysilane, N-methylaminopropyltrimethoxysilane, aminopropyltrimethoxysilane, aminoethylaminopropyltrimethoxysilane, polymeric aminoalkylsilicone, N-methylaminopropyltrimethoxysilane, aminopropylmethyldimethoxysilane, 4-aminobutyltriethoxysilane, oligomeric aminoalkylsilane, and combinations thereof.

6. The method of claim 1 or claim 2 wherein said layer has a no-pick-up time, as evaluated under ASTM D711-89, varying in the range of from 1 minute to 60 minutes at a relative humidity in the range of from 65 to 90 percent.

7. A traffic marking on a road surface prepared according to a method for producing a wear resistant traffic marking on a road surface; said method comprising the steps of:
a) applying on said road surface a layer of a traffic paint composition comprising: copolymer particles dispersed in an aqueous evaporable carrier and an aminosilane bearing an amine moiety, wherein said copolymer particles bear pendant enamine moieties resulting from the reaction of a pendant acetoacetyl moieties with ammonia or amine; said copolymer particles having a glass transition temperature in the range varying from -30°C to 60°C; and wherein the level of said aminosilane is in the range varying from 0.02 to less than 0.1 moles said amine moiety to one mole of said pendant acetoacetyl moieties; and
b) evaporating said aqueous evaporable carrier from said layer to form said wear resistant traffic marking on said road surface.

8. The traffic marking of claim 7 wherein said level of said aminosilane is in the range varying from 0.02 to 0.09 moles said amine moiety to one mole of said pendant acetoacetyl moieties.

9. The traffic marking of claim 7 or claim 8 wherein said copolymer particles comprise as polymerized units, from 1 to 10 weight percent, based on weight of said copolymer particles, of an acetoacetyl functional monomer having the following structure: 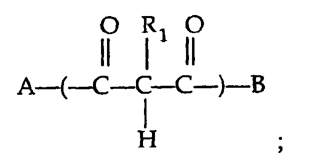 wherein A is either: 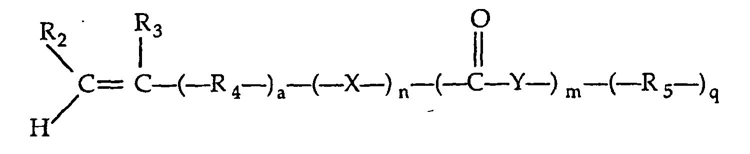 or 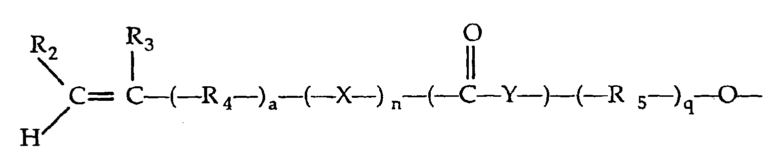 wherein
R₁ is selected from the group consisting of H, alkyl having 1 to 10 carbon atoms, and phenyl;
R₂ is selected from the group consisting of H, alkyl having 1 to 10 carbon atoms, phenyl, halo, CO₂CH₃, and CN;
R₃ is selected from the group consisting of H, alkyl having 1 to 10 carbon atoms, phenyl, and halo;
R₄ and R₅ are independently selected from the group consisting of alkylene having 1 to 10 carbon atoms and phenylene;
a, m, n, and q are independently selected from either 0 or 1;
X and Y are independently selected from ―NH― or ―O―; and
B is selected from the group consisting of A, alkyl having 1 to 10 carbon atoms, phenyl, and heterocyclic groups.

10. The traffic marking of claim 7 or claim 8, wherein said aminosilane is selected from the group consisting of aminoethylaminoethylaminopropyl-trimethoxysilane, aminoethylaminopropylmethyldimethoxysilane, aminopropyltriethoxysilane, aminopropylmethyldimethoxysilane, N-methylaminopropyltrimethoxysilane, aminopropyltrimethoxysilane, aminoethylaminopropyltrimethoxysilane, polymeric aminoalkylsilicone, N-methylaminopropyltrimethoxysilane, aminopropylmethyldimethoxysilane, 4-aminobutyltriethoxysilane, oligomeric aminoalkylsilane, and combinations thereof.

## Patentansprüche

1. Verfahren zum Herstellen einer abriebbeständigen Verkehrs- bzw. Fahrbahnmarkierung auf einer Straßenoberfläche, umfassend die Schritte:
a) des Aufbringens auf die Straßenoberfläche einer Schicht einer Anstrichszusammensetzung zur Anwendung im Straßenverkehr, umfassend Copolymerteilchen, die in einem wässerigen, verdampfbaren Träger dispergiert sind, und ein Aminosilan, welches eine Amingruppe bzw. -komponente trägt, wobei die Copolymerteilchen Enamin-Seitengruppen tragen, die aus der Reaktion von Acetoacetyl-Seitengruppen mit Ammoniak oder Amin resultieren, wobei die Copolymerteilchen eine Glasübergangstemperatur in dem Bereich von -30°C bis 60°C aufweisen, und wobei der Gehalt des Aminosilans in dem Bereich von 0,02 bis zu weniger als 0,1 Mol der Amingruppe zu einem Mol der Acetoacetyl-Seitengruppen variiert, und
b) des Verdampfens des wässerigen, verdampfbaren Trägers von der Schicht, um die abriebbeständige Fahrbahnmarkierung auf der Straßenoberfläche zu bilden.

2. Verfahren nach Anspruch 1, wobei der Gehalt des Aminosilans in dem Bereich von 0,02 bis 0,09 Mol der Amingruppe zu einem Mol der Acetoacetyl-Seitengruppen variiert.

3. Verfahren nach Anspruch 1 oder Anspruch 2, wobei die Copolymerteilchen als polymerisierte Einheiten von 1 bis 10 Gew.-%, bezogen auf das Gewicht der Copolymerteilchen, eines Acetoacetyl-funktionellen Monomers mit der folgenden Struktur umfassen: 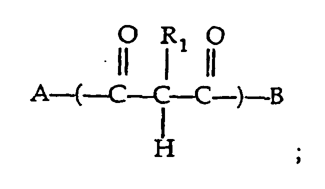 wobei A entweder 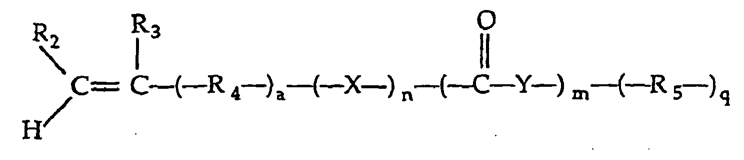 oder 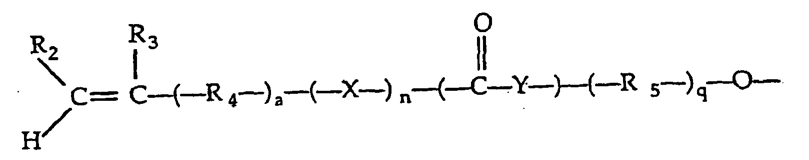 ist,
wobei R₁ aus der Gruppe, bestehend aus H, Alkyl mit 1 bis 10 Kohlenstoffatomen und Phenyl, ausgewählt ist,
R₂ aus der Gruppe, bestehend aus H, Alkyl mit 1 bis 10 Kohlenstoffatomen, Phenyl, Halogen, CO₂CH₃ und CN, ausgewählt ist,
R₃ aus der Gruppe, bestehend aus H, Alkyl mit 1 bis 10 Kohlenstoffatomen, Phenyl und Halogen, ausgewählt ist,
R₄ und R₅ unabhängig aus der Gruppe, bestehend aus Alkylen mit 1 bis 10 Kohlenstoffatomen und Phenylen, ausgewählt sind,
a, m, n und q unabhängig aus entweder 0 oder 1 ausgewählt sind,
X und Y unabhängig aus -NH- oder-O- ausgewählt sind, und
B aus der Gruppe, bestehend aus A, Alkyl mit 1 bis 10 Kohlenstoffatomen, Phenyl und heterocyclischen Gruppen, ausgewählt ist.

4. Verfahren nach Anspruch 3, wobei das Acetoacetyl-funktionelle Monomer aus der Gruppe, bestehend aus Acetoacetoxyethylmethacrylat, Allylacetoacetat, Acetoacetoxyethylacrylat, Acetoacetoxypropylmethacrylat, Acetoacetoxybutylmethacrylat, 2,3-Di(acetoacetoxy)propylmethacrylat und Kombinationen davon, ausgewählt ist.

5. Verfahren nach Anspruch 1 oder Anspruch 2, wobei das Aminosilan aus der Gruppe, bestehend aus Aminoethylaminoethylaminopropyltrimethoxysilan, Aminoethylaminopropylmethyldimethoxysilan, Aminopropyltriethoxysilan, Aminopropylmethyldimethoxysilan, N-Methylaminopropyltrimethoxysilan, Aminopropyltrimethoxysilan, Aminoethylaminopropyltrimethoxysilan, polymerem Aminoalkylsilicon, N-Methylaminopropyltrimethoxysilan, Aminopropylmethyldimethoxysilan, 4-Aminobutyltriethoxysilan, oligomerem Aminoalkylsilan und Kombinationen davon, ausgewählt ist.

6. Verfahren nach Anspruch 1 oder Anspruch 2, wobei die Schicht eine Nicht-Anzugszeit, bestimmt gemäß ASTM D711-89, aufweist, welche in dem Bereich von 1 Minute bis 60 Minuten bei einer relativen Feuchtigkeit in dem Bereich von 65 bis 90% variiert.

7. Fahrbahnmarkierung auf einer Straßenoberfläche, hergestellt gemäß einem Verfahren zum Herstellen einer abriebbeständigen Fahrbahnmarkierung auf einer Straßenoberfläche, wobei das Verfahren die Schritte
a) des Aufbringens auf die Straßenoberfläche einer Schicht einer Anstrichszusammensetzung zur Anwendung im Straßenverkehr, umfassend Copolymerteilchen, die in einem wässerigen, verdampfbaren Träger dispergiert sind, und ein Aminosilan, welches eine Amingruppe trägt, wobei die Copolymerteilchen Enamin-Seitengruppen tragen, die aus der Reaktion von Acetoacetyl-Seitengruppen mit Ammoniak oder Amin resultieren, wobei die Copolymerteilchen eine Glasübergangstemperatur in dem Bereich von -30°C bis 60°C aufweisen, und wobei der Gehalt des Aminosilans in dem Bereich von 0,02 bis zu weniger als 0,1 Mol der Amingruppe zu einem Mol der Acetoacetyl-Seitengruppen variiert, und
b) des Verdampfens des wässerigen, verdampfbaren Trägers von der Schicht, um die abriebbeständige Fahrbahnmarkierung auf der Straßenoberfläche zu bilden,
umfasst.

8. Fahrbahnmarkierung nach Anspruch 7, wobei der Gehalt des Aminosilans in dem Bereich von 0,02 bis 0,09 Mol der Amingruppe zu einem Mol der Acetoacetyl-Seitengruppen variiert.

9. Fahrbahnmarkierung nach Anspruch 7 oder Anspruch 8, wobei die Copolymerteilchen als polymerisierte Einheiten von 1 bis 10 Gew.-%, bezogen auf das Gewicht der Copolymerteilchen, eines Acetoacetyl-funktionellen Monomers mit der folgenden Struktur umfassen: 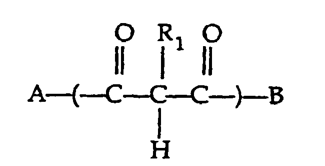 wobei A entweder 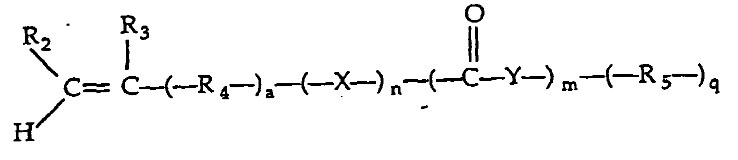 oder 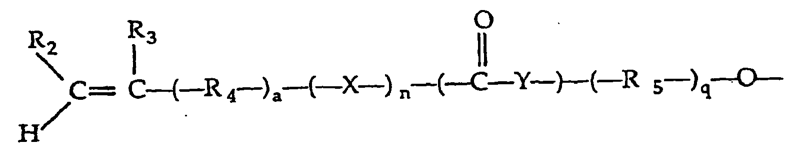 ist,
wobei R₁ aus der Gruppe, bestehend aus H, Alkyl mit 1 bis 10 Kohlenstoffatomen und Phenyl, ausgewählt ist,
R₂ aus der Gruppe, bestehend aus H, Alkyl mit 1 bis 10 Kohlenstoffatomen, Phenyl, Halogen, CO₂CH₃ und CN, ausgewählt ist,
R₃ aus der Gruppe, bestehend aus H, Alkyl mit 1 bis 10 Kohlenstoffatomen, Phenyl und Halogen, ausgewählt ist,
R₄ und R₅ unabhängig aus der Gruppe, bestehend aus Alkylen mit 1 bis 10 Kohlenstoffatomen und Phenylen, ausgewählt sind,
a, m, n und q unabhängig aus entweder 0 oder 1 ausgewählt sind,
X und Y unabhängig aus -NH- oder -O- ausgewählt sind, und
B aus der Gruppe, bestehend aus A, Alkyl mit 1 bis 10 Kohlenstoffatomen, Phenyl und heterocyclischen Gruppen, ausgewählt ist.

10. Fahrbahnmarkierung nach Anspruch 7 oder Anspruch 8, wobei das Aminosilan aus der Gruppe, bestehend aus Aminoethylaminoethylaminopropyltrimethoxysilan, Aminoethylaminopropylmethyldimethoxysilan, Aminopropyltriethoxysilan, Aminopropylmethyldimethoxysilan, N-Methylaminopropyltrimethoxysilan, Aminopropyltrimethoxysilan, Aminoethylaminopropyltrimethoxysilan, polymerem Aminoalkylsilicon, N-Methylaminopropyltrimethoxysilan, Aminopropylmethyldimethoxysilan, 4-Aminobutyltriethoxysilan, oligomerem Aminoalkylsilan und Kombinationen davon, ausgewählt ist.

## Revendications

1. Procédé de préparation d'un marquage de chaussée résistant à l'usure sur la surface d'une route, comprenant les étapes :
a) d'application sur ladite surface de route d'une composition de peinture pour chaussée comprenant : des particules de copolymère dispersées dans un vecteur aqueux évaporable et un aminosilane portant un motif amine, où lesdites particules de copolymère portent des motifs latéraux énamine résultant de la réaction de motifs latéraux acétoacétyle avec l'ammoniac ou une amine ; lesdites particules de copolymère ayant une température de transition vitreuse dans le domaine allant de -30°C à 60°C ; et où la teneur dudit aminosilane est dans le domaine allant de 0,02 à moins de 0,1 mole dudit motif amine pour une mole desdits motifs latéraux acétoacétyle ; et
b) d'évaporation dudit vecteur aqueux évaporable de ladite couche pour former ledit marquage de chaussée résistant à l'usure sur ladite surface d'une route.

2. Procédé selon la revendication 1, **caractérisé en ce que** la teneur dudit aminosilane est dans le domaine allant de 0,02 à moins de 0,09 mole dudit motif amine pour une mole desdits motifs latéraux acétoacétyle.

3. Procédé selon la revendication 1 ou la revendication 2, **caractérisé en ce que** lesdites particules de polymère comprennent comme unités polymérisées, de 1 à 10 % en poids, par rapport au poids desdites particules de polymère, d'un monomère fonctionnalisé acétoacétyle ayant la structure suivante : 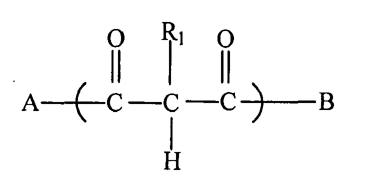 dans laquelle A est soit : 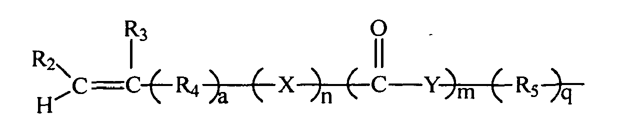 ou 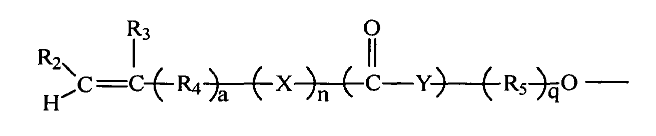 où
R₁ est choisi dans le groupe constitué de H, d'un alkyle ayant de 1 à 10 atomes de carbone, et d'un phényle ;
R₂ est choisi dans le groupe constitué de H, d'un alkyle ayant de 1 à 10 atomes de carbone, d'un phényle, d'un halogéno, de CO₂CH₃ et de CN ;
R₃ est choisi dans le groupe constitué de H, d'un alkyle ayant de 1 à 10 atomes de carbone, d'un phényle et d'un halogéno ;
R₄ et R₅ sont choisis de façon indépendante dans le groupe comprenant un alkylène ayant de 1 à 10 atomes de carbone, et un phénylène ;
a, m, n et q sont choisis de façon indépendante parmi 0 ou 1 ;
X et Y sont choisis de façon indépendante parmi -NH- ou -O- ; et
B est choisi dans le groupe constitué de A, d'un alkyle ayant de 1 à 10 atomes de carbone, d'un phényle, et de groupes hétérocycliques.

4. Procédé selon la revendication 3, **caractérisé en ce que** le monomère fonctionnalisé acétoacétyle est choisi dans le groupe comprenant le méthacrylate d'acétoacétoxyéthyle, l'acétoacétate d'allyle, l'acrylate d'acétoacétoxyéthyle, le méthacrylate d'acétoacétoxypropyle, le méthacrylate d'acétoacétoxybutyle, le méthacrylate de 2,3-di(acétoacétoxy)propyle, et leurs combinaisons.

5. Procédé selon la revendication 1 ou la revendication 2, **caractérisé en ce que** ledit aminosilane est choisi dans le groupe comprenant l'aminoéthylaminoéthylaminopropyl-triméthoxysilane, l'aminoéthylaminopropyl diméthoxysilane, l'aminopropyltriéthoxysilane, l'aminopropylméthyldiméthoxy silane, le N-méthylaminopropyltriméthoxysilane, l'aminopropyltriméthoxysilane, l'aminoéthylaminopropyltriméthoxysilane, un aminoalkylsilicone polymère, le N-méthylaminopropyltriméthoxysilane, l'aminopropylméthyldiméthoxysilane, le 4-aminobutyltriéthoxysilane, un aminoalkylsilane oligomère, et leurs combinaisons.

6. Procédé selon la revendication 1 ou la revendication 2, **caractérisé en ce que** ladite couche a une durée de non prise, telle qu'évaluée selon la norme ASTM D711-89, qui varie dans le domaine de 1 minute à 60 minutes avec une humidité relative dans le domaine de 65 à 90 %.

7. Marquage de chaussée sur la surface d'une route, préparé selon un procédé de préparation d'un marquage de chaussée résistant à l'usure sur la surface d'une route ; ledit procédé comprenant les étapes :
a) d'application sur ladite surface de route d'une composition de peinture pour chaussée comprenant : des particules de copolymère dispersées dans un vecteur aqueux évaporable et un aminosilane portant un motif amine, où lesdites particules de copolymère portent des motifs latéraux énamine résultant de la réaction de motifs latéraux acétoacétyle avec l'ammoniac ou une amine ; lesdites particules de copolymère ayant une température de transition vitreuse dans le domaine allant de -30°C à 60°C ; et où la teneur dudit aminosilane est dans le domaine allant de 0,02 à moins de 0,1 mole dudit motif amine pour une mole desdits motifs latéraux acétoacétyle ; et
b) d'évaporation dudit vecteur aqueux évaporable de ladite couche pour former ledit marquage de chaussée résistant à l'usure sur ladite surface d'une route.

8. Marquage de chaussée selon la revendication 7, **caractérisé en ce que** la teneur dudit aminosilane est dans le domaine allant de 0,02 à moins de 0,09 mole dudit motif amine pour une mole desdits motifs latéraux acétoacétyle.

9. Marquage de chaussée selon la revendication 7 ou la revendication 8, **caractérisé en ce que** lesdites particules de polymère comprennent comme unités polymérisées, de 1 à 10 % en poids, par rapport au poids desdites particules de polymère, d'un monomère fonctionnalisé acétoacétyle ayant la structure suivante : 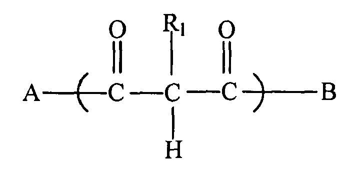 dans laquelle A est soit : 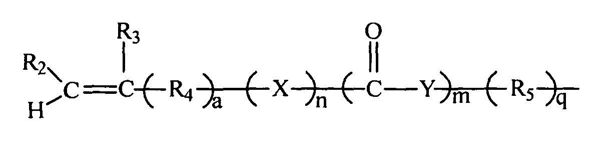 ou 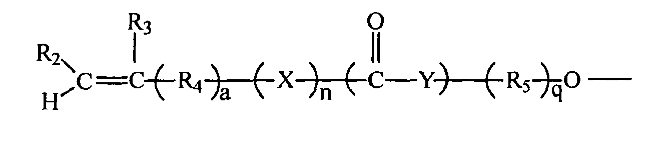 où
R₁ est choisi dans le groupe constitué de H, d'un alkyle ayant de 1 à 10 atomes de carbone, et d'un phényle ;
R₂ est choisi dans le groupe constitué de H, d'un alkyle ayant de 1 à 10 atomes de carbone, d'un phényle, d'un halogéno, de CO₂CH₃ et de CN ;
R₃ est choisi dans le groupe constitué de H, d'un alkyle ayant de 1 à 10 atomes de carbone, d'un phényle et d'un halogéno ;
R₄ et R₅ sont choisis de façon indépendante dans le groupe comprenant un alkylène ayant de 1 à 10 atomes de carbone, et un phénylène ;
a, m, n et q sont choisis de façon indépendante parmi 0 ou 1 ;
X et Y sont choisis de façon indépendante parmi -NH- ou -O- ; et
B est choisi dans le groupe constitué de A, d'un alkyle ayant de 1 à 10 atomes de carbone, d'un phényle, et de groupes hétérocycliques.

10. Marquage de chaussée selon la revendication 7 ou la revendication 8, **caractérisé en ce que** ledit aminosilane est choisi dans le groupe comprenant l'aminoéthylaminoéthylaminopropyl-triméthoxysilane, l'aminoéthylaminopropyl diméthoxysilane, l'aminopropyltriéthoxysilane, l'aminopropylméthyldiméthoxy silane, le N-méthylaminopropyltriméthoxysilane, l'aminopropyltriméthoxysilane, l'aminoéthylaminopropyltriméthoxysilane, un aminoalkylsilicone polymère, le N-méthylaminopropyltriméthoxysilane, l'aminopropylméthyldiméthoxysilane, le 4-aminobutyltriéthoxysilane, un aminoalkylsilane oligomère, et leurs combinaisons.
